# EUROPÄISCHE PATENTSCHRIFT

(11) **EP 2 091 889 B1**
(45) Veröffentlichungstag und Bekanntmachung des Hinweises auf die Patenterteilung: **03.04.2019**
(21) Anmeldenummer: 07847844.3
(22) Anmeldetag: 05.12.2007
(51) Int. Cl.: C04B 35/599, C04B 35/645

(54) **WERKSTOFF AUF DER BASIS VON SiAlONen UND ROHSTOFFMISCHUNG ZU DEREN HERSTELLUNG**
MATERIAL BASED ON SIALONS AND RAW MIXTURE FOR ITS PRODUCTION
MATÉRIAU À BASE D'OXYNITRURES D'ALUMINIUM ET DE SILICIUM (SIALONS) ET MÉLANGE POUR SA PRÉPARATION

(30) Priorität: 06.12.2006 DE 102006057820
(43) Veröffentlichungstag der Anmeldung: 26.08.2009
(73) Patentinhaber: CeramTec GmbH, 73207 Plochingen (DE)
(72) Erfinder: BITTERLICH, Bernd, 73262 Reichenbach/Fils (DE); FRIEDERICH, Kilian, 73207 Plochingen (DE)
(74) Vertreter: Fehrenbacher, Eckhard Anton
(86) Internationale Anmeldenummer: PCT/EP2007/063353
(87) Internationale Veröffentlichungsnummer: WO 2008/068283

(56) Entgegenhaltungen:
- EP-A- 0 397 525
- EP-A1- 0 479 485
- WO-A-97/48659
- WO-A-2005/016847
- DE-A1- 19 850 597
- JP-A- 3 153 574
- JP-A- 3 208 866
- JP-A- S59 232 971
- US-A1- 2006 003 885
- SONG Y S ET AL: "Si3N4 and Si3N4-SiC particulate composite ceramics" J MATER PROCESS TECHNOL; JOURNAL OF MATERIALS PROCESSING TECHNOLOGY JAN 1996 ELSEVIER SCIENCE INC, NEW YORK, NY, USA, Bd. 56, Nr. 1-4, August 1993 (1993-08), Seiten 346-353, XP002485343

## Beschreibung

SiAlON-Werkstoffe eignen sich aufgrund ihrer hohen Verschleißbeständigkeit zum Zerspanen metallischer Werkstoffe, vorzugsweise Gusseisen. Insbesondere alpha/beta-SiAlONe besitzen eine günstige Kombination aus Härte und Zähigkeit. Neben den mechanischen Eigenschaften bei Raumtemperatur sind für die Anwendung als keramischer Schneidwerkstoff auch die Eigenschaften bei Temperaturen um 800°C bis 1000°C entscheidend. Eine wirtschaftliche Herstellung von SiAlONen ist allerdings nur durch Verwendung von Sinterhilfsmitteln möglich. Diese vereinfachen zwar die Verdichtung des Werkstoffs, bleiben nach dem Abkühlen jedoch als überwiegend glasartige Korngrenzenphase im Produkt zurück. Das Erweichen dieser Korngrenzphase bestimmt die mechanischen und chemischen Eigenschaften des Werkstoffs bei erhöhten Temperaturen. Beim Zerspanen von metallischen Werkstoffen wird der Verschleiß vorwiegend durch mechanische Abrasion und zusätzlich durch chemische Reaktionen verursacht. Eine hohe Verschleißfestigkeit kann also nur erzielt werden, wenn Härte, Zähigkeit und chemische Beständigkeit auch bei den Anwendungs-Temperaturen hoch bleiben. Die Menge und Zusammensetzung der glasartigen Korngrenzenphase besitzt deshalb eine Schlüsselfunktion hinsichtlich des Verschleißes.

Verbesserte Hochtemperatur-Eigenschaften können prinzipiell durch Verwenden einer geringeren Menge an Sinteradditiven erreicht werden. Dies führt zu weniger Korngrenzenphase im Produkt, wodurch bei ihrer Erweichung bei hohen Temperaturen der Einfluss auf die Werkstoffeigenschaften geringer ist. Da herkömmliche Schneidwerkstoffe bereits sehr geringe Additivmengen besitzen, ist eine weitere Reduzierung wegen der sich dann verschlechternden Sintereigenschaften kaum möglich, wenn insbesondere das wirtschaftliche Gasdrucksintern angewandt werden soll.

Aus der WO97/486659 ist ein SiAlON-Werkstoff mit 20.60 Gew% Alpha-Phase und 40-80 Gew% beta-Phase der Formel Mₓ(Si,Al)₁₂(O,N)₁₆ bekannt. M steht dabei für ein Seltenerdelement oder Sr, Ca, Mg, Li oder Na. Dieser Werkstoff wird durch Axialpressen und sintern hergestellt und findet Einsatz als Schneidewerkzeug.

Aus der DE 198 50 597 A1 gehen alpha-SiAlON-Werkstoffe der Formel (Mg_{y}R_{(1-y)})ₓSi₍₁₂₋ₘ₋ₙ₎Al₍ₘ₊ₙ₎OₙN₁₆₋ₙ hervor, wobei R für Y, Seltenerdmetalle wie La, Ce, Pr, Nd-Lu und Ca und/oder deren Mischungen steht.

Die Härte von SiAlON-Werkstoffen bei höheren Temperaturen kann auch durch die Zugabe von Hartstoffpartikel wie z.B. SiC gesteigert werden, wie aus der WO 2005/016847 A1 bekannt ist.

Aus der US 2006/0003885 A1 sind Werkstoffe der Formel Si_{6-z}Al_{z}O_{z}N_{8-z} bekannt, wobei z = 0,2 bis 0,6 ist. Die mechanische Härte der Werkstoffe wird über den anfänglich eingesetzten Al₂O₃-Anteil beeinflusst.

In der EP 0 479 485 A1 wird beschrieben, wie ein SiC-verstärkter beta-SiAlON-Werkstoff durch die Zugabe von 1 bis 60 Masse% HfO₂ leichter verdichtet werden kann, ohne dass der zusätzliche HfO₂-Zusatz die Hochtemperatur-Eigenschaften negativ beeinflusst. Das HfO₂ bildet beim Sintern eine flüssige Phase, die die Verdichtung fördert, nach dem Sinterprozess aber als "disperse Phase" vorliegt.

In der US 5,200,374 A wird beschrieben, dass sich bei Zugabe von HfO₂ nach dem Sintern eine Hf-Oxid-Phase mit Defekt-Fluorit-Struktur bildet, in der dreiwertige Ionen, wie z.B. Seltenerde-Elemente, eingelagert sind.

Auch in anderen Veröffentlichungen wie in der EP 0 227 471 A2 und der EP 0 792 854 A2 wird beschrieben, wie HfO₂ oder ein ähnlicher Zusatz beigegeben werden kann, um bei einem schwer zu verdichtenden Werkstoff eine ausreichende Enddichte zu erreichen. In jedem Fall wird jedoch, wie insbesondere aus der EP 0 479 485 A2 bekannt, eine Mindestmenge von 1 Masse% HfO₂ als notwendig angesehen, um eine merkbare Verbesserung des Verdichtungsverhaltens zu erzielen.

Aufgabe der vorliegenden Erfindung ist es, einen verschleißfesten SiAlON-Werkstoff bereitzustellen, der trotz niedriger Anteile an Sinterhilfsmitteln, insbesondere Hf, anstelle des aufwändigen Heißpressens (HP) oder heißisostatischen Pressens (HIP) auch durch das wirtschaftlichere Gasdrucksintern verdichtet werden kann.

Beim erfindungsgemäßen Werkstoff auf der Basis von SiAlONen reicht bereits ein geringerer Hf-Zusatz als bei herkömmlichen SiAlON-Werkstoffen aus, um gute Sintereigenschaften und verbesserte Verschleißbeständigkeit beim Zerspanen zu erreichen. Der erfindungsgemäße Werkstoff wird bei Temperaturen von 1750 bis 2000°C gesintert. Er kann durch Gasdrucksintern auf >99% theoretische Dichte verdichtet werden.

Der erfindungsgemäße α/β-SiAlON-Werkstoff enthält 5 bis 50 Masse%, bevorzugt 5 bis 30% Masse% α/(α+β) RE-α-SiAlON, wobei RE für mindestens ein Kation aus Y, Sc, Lu, La, Ce, Pr, Nd, Pm, Sm, Eu, Gd, Tb, Dy, Ho, Er, Tm, Yb, Mg oder Ca, bevorzugt mindestens ein Kation aus Y, Sc, Lu, La, Ce, Pr, Nd, Pm, Sm, Eu, Gd, Tb, Dy, Ho, Er, Tm, Yb und zusätzlich mindestens ein Kation aus Mg oder Ca steht, sowie 95 bis 50 Masse%, bevorzugt 95 bis 70 Masse% β/(α+β) β-SiAlON und einer Hf-haltigen amorphen oder teil-kristallinen Korngrenzenphase mit einem Anteil am Gesamtwerkstoff von unter 10 Vol%. Der Hf-Gehalt des gesinterten Werkstoffs beträgt 0,2 bis 1,0 Masse%, bevorzugt 0,3 bis 0,8 Masse%, besonders bevorzugt 0,4 bis 0,6 Masse%. Die Dispersionsphase enthält globulare Partikeln mit mittleren Partikelgrößen von 0,2 bis 15 µm, bevorzugt 0,4 bis 10 µm aus einem Hartstoff aus SiC, die in einem Anteil von 5 bis 30 Vol%, bevorzugt 7,5 bis 20 Vol%, besonders bevorzugt 10 bis 15% Vol% im Sinterkörper enthalten sind.

Die Rohstoffmischung des α/β-SiAlON-SiC-Werkstoffs besteht aus die Komponenten Si₃N₄, Al₂O₃, AIN, MgO, Y₂O₃, HfO₂ und SiC, wobei der Anteil an SiC 5 bis 30 Vol%, bevorzugt 7,5 bis 20 Vol%, besonders bevorzugt 10 bis 15 Vol%, der Anteil an HfO₂ 0,2 bis 1,0 Masse%, bevorzugt 0,3 bis 0,9 Masse%, besonders bevorzugt 0,4 bis 0,8 Masse%, der Gesamt-Additiv-Anteil 6,0 bis 10,0 Masse%, bevorzugt 6,5 bis 9,0, besonders bevorzugt 7,0 bis 8,5 und das Atom%-Verhältnis von Y zu Mg 7,0 bis 10,0, bevorzugt 7,5 bis 9,0, besonders bevorzugt 8,0 bis 8,5 beträgt.

HfO₂ besitzt in der Schmelzphase der sonstigen Sinteradditive eine geringe Löslichkeit, die von der Zusammensetzung der Ausgangsmischung abhängt. Beim Abkühlen scheidet sich das gelöste Hf teilweise als eine fein verteilte kristalline Hf-Phase in der Korngrenzenphase aus. Der Zusatz einer geringen Menge an Hf-Oxid erhöht also die Menge an Schmelzphase während des Sintervorgangs, führt aber nicht zu mehr glasartiger Korngrenzenphase im Produkt. Damit besteht eine Möglichkeit, die Menge der sonstigen Sinteradditive zu verringern, ohne die Sinterfähigkeit zu verschlechtern. Überschüssiges HfO₂, was sich nicht in der Flüssigphase lösen kann, kann beim Sintern durch eine N₂-reiche Atmosphäre in dispers verteilte Hf-Nitride umgewandelt werden.

Nur durch die Zugabe von HfO₂ bei gleichzeitig leicht verringerter Menge an sonstigen Additiven kann eine merkliche Verbesserung im Verschleißverhalten festgestellt werden, wie an Hand von Ausführungsbeispielen (siehe Tabelle 2) bewiesen wird. Ein Zusatz von mehr als 1 Masse% HfO₂ verschlechtert dagegen die Werkstoffeigenschaften, wie anhand von Beispielen gezeigt wird. Die gleichzeitige Verwendung von Sinteradditiven mit unterschiedlichen Kationen, wie beispielsweise Y und Mg der Ausführungsbeispiele, beeinflusst, zusätzlich zum Hf-Zusatz, das Sinterverhalten positiv. Es wird jedoch vermutet, dass auch bei Rohstoffmischungen mit nur einem Kation ein zusätzlicher Hf-Zusatz die beschriebenen Vorteile bewirkt.

Das Hf kann statt als Oxid auch in anderer Form als organische oder inorganische Verbindung eingebracht werden. Wird das Hf als pulverförmige Verbindung, z.B. als HfO₂, eingebracht, sollte die Größe der Pulverteilchen nur wenige µm betragen. Sind die Pulverteilchen zu grob, lösen sie sich während des Sinterns nur langsam auf und tragen damit kaum zur Erhöhung der Flüssigphase bei, was keine Verbesserung der Sintereigenschaften bewirkt.

Nach dem Sintern können mit herkömmlichen röntgenographischen Analyseverfahren, beispielsweise XRD, keine oder nur sehr schwache Anzeichen für das Vorhandensein einer kristallinen Hf-Oxid-Phase detektiert werden, da deren Gehalte zu gering sind, d.h. kleiner als etwa 1 Masse%. Je nach Sinterbedingungen können jedoch geringe Mengen an Hf-Oxinitrid- oder Hf-Nitrid-Phasen nachgewiesen werden, die bei hohen Hf-Gehalten sogar im REM als disperse Teilchen mit etwa 0,5 µm Durchmesser sichtbar sind.

Allerdings ist die Größe der beigegebenen Hartstoffpartikel zu beachten. Wenn diese zu klein sind, unter 0,2 µm, wird wegen der großen Pulver-Oberfläche viel Glasphase zur Benetzung benötigt, die beim Sintern fehlt. Sind die Hartstoffpartikel zu grob, etwa im Bereich von über 15 µm, erfolgt eine Sinterbehinderung.

Anhand von Ausführungsbeispielen wird die Erfindung näher erläutert. Es wurden drei Werkstoffgruppen gebildet, die in den nachfolgenden Tabellen 1 und 2 aufgeführt sind. Aus den jeweiligen Werkstoffen wurden Sinterkörper in der Form von Schneidwerkzeugen hergestellt. Es wurde die Auswirkung der Zugabe von HfO₂ zu Y-Mg-alpha/beta-SiAlON-Werkstoffen unterschiedlicher Zusammensetzung auf das Sinterverhalten und den Verschleiß beim Zerspanen verglichen.

Zur Herstellung eines erfindungsgemäßen SiAlON-Werkstoffs der Ausführungsbeispiele wurde feines bzw. fein gemahlenes Si₃N₄-Pulver mit einer Korngröße von D50 ≤ 1 µm und mit einer spezifischen Oberfläche ≥ 10 m²/g sowie SiC als Hartstoffpartikel mit einer Korngröße von D50 etwa 0,6 µm unter Zusatz der übrigen pulverförmigen Rohstoffe und bekannter Bindemittel gemischt und axial gepresst.

Nach dem Entbindern erfolgte das Sintern. Die Ausführungsbeispiele wurden alle mittels Gasdrucksintern bei 1930°C und einem Gasdruck von 100 bar hergestellt. Die Haltezeit betrug drei Stunden.

Aus dem Werkstoff wurden Schneidwerkzeuge hergestellt, mit denen an Bremsscheiben aus dem Werkstoff GG15 Zerspantests durchgeführt wurden. Dabei wurden die Bremsscheiben mit einer Schnittgeschwindigkeit von vc = 1000 m/min, einem Vorschub von f = 0,50 mm/U, einer Schnitttiefe von ap = 2,0 mm und einem Einstellwinkel von α = 85° abgedreht.

**Tabelle 1: Ausführungsbeispiele: Daten der Rohstoffmischung**

| | | **Rohstoffmischung** | | | | | |
|---|---|---|---|---|---|---|---|
| **Grup pe** | **Nr:** | **Si₃N₄ [Masse-%]** | **AlN [Masse%]** | **Atom%- Verhältnis Y : Mg** | **Gesamt- Additiv- Gehalt [Masse-%] (1)** | **Hf [Masse-%]** | **SiC [Vol.-%]** |
| A | 1 (Ref.) | 89,5 | 5,00 | 7,5 | 10,5 | - | - |
| A | 2 | 88,5 | 5,00 | 7,5 | 11,5 | 0,85 | - |
| A | 3 | 85,5 | 5,00 | 7,5 | 14,5 | 3,39 | - |
| | | | | | | | |
| B | 4 (Ref.) | 66,0 | 4,14 | 9,0 | 9,3 | - | 25 |
| B | 5 | 65,0 | 4,14 | 9,0 | 10,3 | 0,85 | 25 |
| B | 6 | 65,3 | 4,14 | 9,0 | 10,0 | 0,42 | 25 |
| | | | | | | | |
| C | 7 (Ref.) | 80,8 | 4,14 | 9,0 | 9,3 | - | 10 |
| C | 8 | 81,1 | 4,14 | 8,5 | 9,0 | 0,85 | 10 |
| C | 9 | 81,3 | 4,14 | 8,3 | 8,8 | 0,76 | 10 |
| C | 10 | 81,7 | 4,14 | 8,3 | 8,4 | 0,69 | 10 |
| C | 11 | 82,4 | 4,14 | 8,2 | 7,7 | 0,58 | 10 |
| C | 12 | 83,2 | 4,14 | 9,2 | 6,9 | 0,46 | 10 |

| | | | | | | | |
|---|---|---|---|---|---|---|---|
| (1) Entspricht der Menge von AlN+Al₂O₃+MgO+Y2O₃+HfO₂, den Stoffen, die beim Sintern die flüssige Phase bilden (Oxid-Verunreinigung des Si₃N₄ oder AIN bleiben unberücksichtigt). | | | | | | | |

Das Masse%-Verhältnis zwischen Al₂O₃ und MgO beträgt stets 2,53.

**Tabelle 2: Ausführungsbeispiele: Eigenschaften**

| | | **Eigenschaften Werkstoff** | | | | |
|---|---|---|---|---|---|---|
| **Grup pe** | **Nr:** | **Dichte [% th.]** | **Alpha- SiAlON [Masse-%] (2)** | **Härte [HV10]** | **Zähigkeit K_{IC} [MPam^{1/2}]** | **Verschleiß bzgl. Referenz** |
| A | 1 (Ref.) | 99,8 | 42 | 1782 | 6,3 | 1 |
| A | 2 | 99,8 | 38 | 1697 | 5,9 | - ^{*)} |
| A | 3 | 99,7 | 19 | 1582 | 6,3 | - ^{*)} |
| | | | | | | |
| B | 4 (Ref.) | 99,8 | 25 | 2053 | 6,3 | 1 |
| B | 5 | 99,8 | 33 | 1897 | 5,8 | 1,06 |
| B | 6 | 99,8 | 41 | 1893 | 6,1 | 1,03 |
| | | | | | | |
| C | 7 (Ref.) | >99,8 | 30 | 1746 | 6,3 | 1 |
| C | 8 | >99,8 | 17 | 1707 | 5,8 | 0,96 |
| C | 9 | >99,8 | 20 | 1758 | 6,0 | 0,94 |
| C | 10 | >99,8 | 20 | - ^{*)} | - ^{*)} | - ^{*)} |
| C | 11 | >99,8 | 18 | 1744 | 5,8 | 0,81 |
| C | 12 | 88 | - ^{*)} | - ^{*)} | - ^{*)} | - ^{*)} |

| | | | | | | |
|---|---|---|---|---|---|---|
| *) nicht bestimmt (2) Im gesinterten Bauteil; Anteil von alpha-SiAlON, bezogen auf die Gesamtmenge von alpha- und beta-SiAlON, d.h. α/(α+β) in Masse%. | | | | | | |

Gruppe A (Nr.1 bis 3): (nicht erfindungsgemäss) Der Einfluss der Zugabe von HfO₂ zu einer α/β-SiAlON-Zusammensetzung: Die Härte sinkt, die Zähigkeit wird nicht signifikant verändert. Zerspantests wurden wegen der niedrigen Härte nicht durchgeführt. Eine zusätzliche Hf-Zugabe zu einer herkömmlichen SiAlON-Zusammensetzung verschlechtert also die Härte, was sich unmittelbar auf einen höheren Verschleiß beim Zerspanen auswirken würde.
Gruppe B (Nr.4 bis 6): (Beispiel 5 ist nicht erfindungsgemäss) Der Einfluss der Zugabe von HfO₂ zu einem SiC-haltigen α/β-SiAlON: Hier sinkt trotz des hohen SiC-Anteils die Härte ebenfalls merklich ab. Der Verschleiß gegenüber der Hf-freien Zusammensetzung ist erhöht. Die Sinterfähigkeit des hoch hartstoff-haltigen SiAlONs wird durch den geringen Hf-Zusatz nicht merklich verbessert.
Gruppe C (Nr.7 bis 12):
   Der Einfluss der Zugabe von HfO₂ zu einem SiC-haltigen SiAlON, bei dem der Gesamtadditivgehalt, d.h. die Summe aller eine Schmelze bildenden Zusätze der Rohstoffmischung, trotz zusätzlicher HfO₂-Zugabe nicht erhöht wird: Die herkömmliche Sinteradditivmenge wird reduziert und als Ausgleich HfO₂ zugegeben, das, wie oben beschrieben, beim Sintern die Menge an der Flüssigphase erhöht, beim Abkühlen jedoch kristallisiert und eine hochtemperatur-stabile KorngrenzenPhase bewirkt. Die Ausgleichsmenge an HfO₂ kann sogar geringer sein als die reduzierte Menge der übrigen Sinteradditive. Die Härte wird nicht merklich beeinflusst, der Verschleiß jedoch erniedrigt. Das bessere Verschleißverhalten wird in diesem Fall verursacht durch den niedrigeren Gehalt an amorpher KorngrenzenPhase, was eine bessere Warmhärte und geringere chemische Reaktionen mit dem Werkstoff des Werkstücks bewirkt.

## Patentansprüche

1. Rohstoffmischung zur Herstellung eines α/β-SiAlON-SiC-Werkstoffs bestehend aus den
Komponenten Si₃N₄, Al₂O₃, AIN, MgO, Y₂O₃, HfO₂ und Hartstoffpartikeln bestehend aus
SiC in einer Korngröße von 0,2 µm bis 15 µm und mit einem Anteil von 5 bis 30 Vol.-%, **dadurch gekennzeichnet, dass** der Gesamt-Additiv-Anteil, definiert als die Menge in Masse% von AlN+Al₂O₃+MgO+Y₂O₃+HfO₂ (Oxid-Verunreinigung des Si₃N₄ oder AIN bleiben unberücksichtigt), an der Gesamtzusammensetzung der Rohstoffmischung, 6,0 bis 10,0 Masse% beträgt, dass der Anteil an HfO₂ 0,2 bis 1,0 Masse% beträgt, und dass das Atom%-Verhältnis von Y zu Mg 7,0 bis 10,0 beträgt.

2. Rohstoffmischung nach Anspruch 1, **dadurch gekennzeichnet, dass** der Anteil an SiC 7,5 bis 20 Vol.-% beträgt.

3. Rohstoffmischung nach Anspruch 1, **dadurch gekennzeichnet, dass** der Anteil an SiC 10 bis 15 Vol.-% beträgt.

4. Rohstoffmischung nach Anspruch 1, **dadurch gekennzeichnet, dass** der Gesamt-Additiv-Anteil 6,5 bis 9,0 Masse%, bevorzugt 7,0 bis 8,5 Masse%, beträgt.

5. Rohstoffmischung nach Anspruch 1, **dadurch gekennzeichnet, dass** der Anteil an HfO₂ 0,3 bis 0,9 Masse%, bevorzugt 0,4 bis 0,8 Masse% beträgt.

6. Rohstoffmischung nach Anspruch 1, **dadurch gekennzeichnet, dass** das Atom%-Verhältnis von Y zu Mg 7,5 bis 9,0 beträgt.

7. Rohstoffmischung nach Anspruch 1, **dadurch gekennzeichnet, dass** das Atom%-Verhältnis von Y zu Mg 8,0 bis 8,5 beträgt

8. Gesinterter Werkstoff auf der Basis von SiAlON, hergestellt aus einer Rohstoffmischung bestehend aus den Komponenten Si₃N₄, Al₂O₃, AlN, MgO, Y₂O₃, HfO₂ und Hartstoffpartikeln bestehend aus SiC, wobei der Gesamt-Additiv-Anteil, definiert als die Menge in Masse% von AIN + Al₂O₃ + MgO + Y₂O₃ + HfO₂ (Oxid-Verunreinigungen des Si₃N₄ oder AIN bleiben unberücksichtigt), an der Gesamtzusammensetzung der Rohstoffmischung 6,0 bis 10,0 Masse% beträgt, **dadurch gekennzeichnet,**
**dass** er einen SiC-haltigen α/β-SiAlON-Werkstoff mit einem Anteil α/(α+β) RE-α-SiAlON von 5 bis 50% Masse%, wobei RE für mindestens ein Kation aus Y, Sc, Lu, La, Ce, Pr, Nd, Pm, Sm, Eu, Gd, Tb, Dy, Ho, Er, Tm, Yb, Mg oder Ca, bevorzugt mindestens ein Kation aus Y, Sc, Lu, La, Ce, Pr, Nd, Pm, Sm, Eu, Gd, Tb, Dy, Ho, Er, Tm, Yb und zusätzlich mindestens ein Kation aus Mg oder Ca steht, sowie 95 bis 50 Masse% β/(α+β) β-SiAlON und eine Hfhaltige amorphe oder teil-kristalline Korngrenzphase mit einem Anteil am Gesamtwerkstoff von unter 10 Vol.-% enthält, **dadurch gekennzeichnet, dass** der gesinterte Werkstoff Y und Mg in einem Atom%-Verhältnis von Y zu Mg 7,0 bis 10,0 enthält, dass der Hf-Gehalt des gesinterten Werkstoffs 0,2 bis 1,0 Masse%, beträgt, dass er eine Dispersionsphase, bestehend aus globularen Partikeln aus SiC-Hartstoff mit mittleren Partikelgrößen von 0,2 bis 15 µm, die in einem Anteil von 5 bis 30 Vol.-% enthalten sind, enthält und dass die theoretische Dichte des Werkstoffes größer als 99 % ist.

9. Gesinterter Werkstoff nach Anspruch 8, **dadurch gekennzeichnet, dass** der Anteil an α/(α+β) RE-α-SiAlON 5 bis 30 Masse% beträgt.

10. Gesinterter Werkstoff nach Anspruch 8, **dadurch gekennzeichnet, dass** der Anteil an β/(α+β) β-SiAlON 95 bis 70 Masse% beträgt.

11. Gesinterter Werkstoff nach Anspruch 8, **dadurch gekennzeichnet, dass** das Atom%-Verhältnis von Y zu Mg 7,5 bis 9,0, bevorzugt 8,0 bis 8,5 beträgt.

12. Gesinterter Werkstoff nach Anspruch 8, **dadurch gekennzeichnet, dass** der
Anteil an Hf 0,3 bis 0,8 Masse%, bevorzugt 0,4 bis 0,6 Masse% beträgt.

13. Gesinterter Werkstoff nach Anspruch 8, **dadurch gekennzeichnet, dass** der Anteil an SiC 7,5 bis 20 Vol.-%, bevorzugt 10 bis 15 Vol% beträgt.

14. Gesinterter Werkstoff nach Anspruch 8, **dadurch gekennzeichnet, dass** die mittlere Partikelgröße des SiC 0,4 bis 10 µm beträgt.

15. Verwendung eines Sinterkörpers, hergestellt aus einem Werkstoff nach einem der Ansprüche 8-14, zur Herstellung von Schneidwerkzeugen.

## Claims

1. Raw material mixture for producing an α/β-SiAlON SiC material consisting of the components Si₃N₄, Al₂O₃, AIN, MgO, Y₂O₃, HfO₂ and hard material particles consisting of SiC in a particle size of from 0.2 µm to 15 µm and in a proportion of from 5 to 30 vol.%, **characterized in that** the total additive proportion, defined as the amount in mass% of AIN + Al₂O₃ + MgO + Y₂O₃ + HfO₂ (oxide impurities of the Si₃N₄ or AIN are not taken into account), with respect to the total composition of the raw material mixture, is from 6.0 to 10.0 mass%, **in that** the proportion of HfO₂ is from 0.2 to 1.0 mass%, and **in that** the at.% ratio of Y to Mg is from 7.0 to 10.0.

2. Raw material mixture according to claim 1, **characterized in that** the proportion of SiC is from 7.5 to 20 vol.%.

3. Raw material mixture according to claim 1, **characterized in that** the proportion of SiC is from 10 to 15 vol.%.

4. Raw material mixture according to claim 1, **characterized in that** the total additive proportion is from 6.5 to 9.0 mass%, preferably from 7.0 to 8.5 mass%.

5. Raw material mixture according to claim 1, **characterized in that** the proportion of HfO₂ is from 0.3 to 0.9 mass%, preferably from 0.4 to 0.8 mass%.

6. Raw material mixture according to claim 1, **characterized in that** the at.% ratio of Y to Mg is from 7.5 to 9.0.

7. Raw material mixture according to claim 1, **characterized in that** the at.% ratio of Y to Mg is from 8.0 to 8.5.

8. Sintered material based on SiAlON, produced from a raw material mixture consisting of the components Si₃N₄, Al₂O₃, AlN, MgO, Y₂O₃, HfO₂ and hard material particles consisting of SiC, the total additive proportion, defined as the amount in mass% of AIN + Al₂O₃ + MgO + Y₂O₃ + HfO₂ (oxide impurities of the Si₃N₄ or AIN are not taken into account), with respect to the total composition of the raw material mixture, being from 6.0 to 10.0 mass%,
**characterized in that**
said sintered material contains an SiC-containing α/β-SiAlON material in a proportion α/(α+β) RE-α-SiAlON of from 5 to 50% mass%, where RE represents at least one cation from Y, Sc, Lu, La, Ce, Pr, Nd, Pm, Sm, Eu, Gd, Tb, Dy, Ho, Er, Tm, Yb, Mg or Ca, preferably at least one cation from Y, Sc, Lu, La, Ce, Pr, Nd, Pm, Sm, Eu, Gd, Tb, Dy, Ho, Er, Tm, Yb and additionally at least one cation from Mg or Ca, and from 95 to 50 mass% β/(α+β) β-SiAlON and an Hf-containing amorphous or semi-crystalline grain boundary phase in a proportion of less than 10 vol.% with respect to the total material, **characterized in that** the sintered material contains Y and Mg in an at.% ratio of Y to Mg of from 7.0 to 10.0, **in that** the Hf content of the sintered material is from 0.2 to 1.0 mass%, **in that** said sintered material contains a dispersion phase consisting of globular particles of SiC hard material having average particle sizes of from 0.2 to 15 µm and contained in a proportion of from 5 to 30 vol.%, and **in that** the theoretical density of the material is greater than 99%.

9. Sintered material according to claim 8, **characterized in that** the proportion of α/(α+β) RE-α-SiAlON is from 5 to 30 mass%.

10. Sintered material according to claim 8, **characterized in that** the proportion of β/(α+β) β-SiAION is from 95 to 70 mass%.

11. Sintered material according to claim 8, **characterized in that** the at.% ratio of Y to Mg is from 7.5 to 9.0, preferably from 8.0 to 8.5.

12. Sintered material according to claim 8, **characterized in that** the proportion of Hf is from 0.3 to 0.8 mass%, preferably from 0.4 to 0.6 mass%.

13. Sintered material according to claim 8, **characterized in that** the proportion of SiC is from 7.5 to 20 vol.%, preferably from 10 to 15 vol.%.

14. Sintered material according to claim 8, **characterized in that** the average particle size of the SiC is from 0.4 to 10 µm.

15. Use of a sintered body, produced from a material according to any of claims 8-14, for producing cutting tools.

## Revendications

1. Mélange de matières premières destiné à la préparation d'un matériau à base d'α/β-SiAlON-SiC comprenant les constituants Si₃N₄, Al₂O₃, AlN, MgO, Y₂O₃, HfO₂ et des particules dures comprenant du SiC d'une granulométrie de 0,2 µm à 15 µm et ayant une proportion de 5 à 30 % en volume, **caractérisé en ce que** la proportion totale d'additif, définie comme la quantité en % en masse de AIN + Al₂O₃ + MgO + Y₂O₃ + HfO₂ (les impuretés oxydes du Si₃N₄ ou de l'AlN n'étant pas prises en compte) dans la composition totale du mélange de matières premières, va de 6,0 à 10,0 % en masse, **en ce que** la proportion de HfO₂ est de 0,2 à 1,0 % en masse et **en ce que** le rapport en pourcentage atomique du Y au Mg est de 7,0 à 10,0.

2. Mélange de matières premières selon la revendication 1, **caractérisé en ce que** la proportion de SiC est de 7,5 à 20 % en volume.

3. Mélange de matières premières selon la revendication 1, **caractérisé en ce que** la proportion de SiC est de 10 à 15 % en volume.

4. Mélange de matières premières selon la revendication 1, **caractérisé en ce que** la proportion totale d'additif est de 6,5 à 9,0 % en masse, de préférence de 7,0 à 8,5 % en masse.

5. Mélange de matières premières selon la revendication 1, **caractérisé en ce que** la proportion de HfO₂ est de 0,3 à 0,9 % en masse, de préférence de 0,4 à 0,8 % en masse.

6. Mélange de matières premières selon la revendication 1, **caractérisé en ce que** le rapport en pourcentage atomique du Y au Mg est de 7,5 à 9,0.

7. Mélange de matières premières selon la revendication 1, **caractérisé en ce que** le rapport en % atomique du Y au Mg est de 8,0 à 8,5.

8. Matériau fritté à base de SiAlON, obtenu à partir d'un mélange de matières premières comprenant les constituant Si₃N₄, Al₂O₃, AlN, MgO, Y₂O₃, HfO₂ et des particules dures comprenant du SiC, la proportion totale d'additif, définie comme la quantité en % en masse de AIN + Al₂O₃ + MgO + Y₂O₃ + HfO₂ (les impuretés oxydes du Si₃N₄ ou de l'AlN n'étant pas prises en compte) dans la composition totale du mélange de matières premières, étant de 6,0 à 10,0 % en masse, **caractérisé en ce qu'**il contient un matériau d'α/β-SiAlON contenant du SiC ayant une proportion α/(α+β) RE-α-SiAlON de 5 à 50 % en masse, RE représentant au moins un cation parmi Y, Sc, Lu, La, Ce, Pr, Nd, Pm, Sm, Eu, Gd, Tb, Dy, Ho, Er, Tm, Yb, Mg ou Ca, de préférence au moins un cation parmi Y, Sc, Lu, La, Ce, Pr, Nd, Pm, Sm, Eu, Gd, Tb, Dy, Ho, Er, Tm, Yb et, en outre, au moins un cation Mg ou Ca, et 95 à 50 % en masse de β/(α+β) β-SiAlON et une phase de limite de grain amorphe ou partiellement cristalline contenant du Hf et ayant une proportion de matériau total inférieure à 10 % en volume, **caractérisé en ce que** le matériau fritté contient du Y et du Mg dans un rapport en pourcentage atomique du Y au Mg de 7,0 à 10,0, **en ce que** la teneur en Hf du matériau fritté est de 0,2 à 1,0 % en masse, **en ce qu'**il contient une phase de dispersion comprenant desparticules globulaires de matériau dur de SiC ayant des tailles de particules moyennes de 0,2 à 15 µm, présentes dans une proportion de 5 à 30 % en volume, et **en ce que** la densité théorique du matériau est supérieure à 99 %.

9. Matériau fritté selon la revendication 8, **caractérisé en ce que** la proportion de α/(α+β) RE-α-SiAlON est de 5 à 30 % en masse.

10. Matériau fritté selon la revendication 8, **caractérisé en ce que** la proportion de β/(α+β) β-SiAlON est de 95 à 70 % en masse.

11. Matériau fritté selon la revendication 8, **caractérisé en ce que** le rapport en pourcentage atomique du Y au Mg est de 7,5 à 9,0, de préférence de 8,0 à 8,5.

12. Matériau fritté selon la revendication 8, **caractérisé en ce que** la proportion de Hf est de 0,3 à 0,8 % en masse, de préférence de 0,4 à 0,6 % en masse.

13. Matériau fritté selon la revendication 8, **caractérisé en ce que** la proportion de SiC est de 7,5 à 20 % en volume, de préférence de 10 à 15 % en volume.

14. Matériau fritté selon la revendication 8, **caractérisé en ce que** la taille moyenne de particule du SiC est de 0,4 à 10 µm.

15. Utilisation d'un corps fritté obtenu à partir d'un matériau selon l'une des revendications 8 à 14 pour la fabrication d'outils de coupe.
